# EUROPEAN PATENT SPECIFICATION

(11) **EP 2 252 452 B1**
(45) Date of publication and mention of the grant of the patent: **30.11.2011**
(21) Application number: 09721963.8
(22) Date of filing: 02.03.2009
(51) Int. Cl.: B29C 70/44, B29C 43/12, B29C 43/36, B29C 70/34, B29C 70/48

(54) **COMBINED VACUUM ASSISTED RESIN TRANSFER MOULDING AND PREPREG AUTOCLAVE MOULDING METHOD AND APPARATUS FOR PRODUCING FIBER COMPOSITE COMPONENTS**
KOMBINIERTES VAKUUM HARZINFUSIONSVERFAHREN UND PREPREG AUTOKLAV FORMVERFAHREN SOWIE VORRICHTUNG ZUR HERSTELLUNG VON FASERVERBUNDKOMPONENTEN
PROCÉDÉ ET DISPOSITIF DE MOULAGE COMBINANT UN TRANSFERT DE RESINE SOUS VIDE ET UN MOULAGE DE PREPREG AVEC UN AUTOCLAVE POUR LA PRODUCTION DE PRODUITS COMPOSITES À FIBRES

(30) Priority: 19.03.2008 DE 102008015070
(43) Date of publication of application: 24.11.2010
(73) Proprietor: Eurocopter Deutschland GmbH, 86609 Donauwörth (DE)
(72) Inventor: VOGL, Fritz, 83666 Waarkirchen (DE); DAVID, Kathrin, 83043 Bad Aibling (DE); WELLHAUSEN, Christian, 85521 Ottobrunn (DE)
(74) Representative: GPI & Associés
(86) International application number: PCT/IB2009/000387
(87) International publication number: WO 2009/115878

(56) References cited:
- EP-A- 1 393 883
- EP-A- 1 916 091
- DE-A1- 10 150 659
- GB-A- 2 300 138
- US-A1- 2004 265 406
- US-B1- 6 527 894

## Description

The invention relates to a method for producing fiber composite components from dry material and, fiber semifinished products, which were pre-impregnated using resin (prepreg), under vacuum support and elevated temperature and pressure in an autoclave. The invention is defined in claims 1 and 2 respectively.

A method for producing plastic components by implementing a resin matrix in a fiber composite semifinished product by an injection method is described in DE 102 39 325 A1, in which a similar device is used. It comprises an injection chamber which is implemented between a mold for accommodating the fiber composite semifinished products and a gas-permeable and resin-impermeable semipermeable film, and a ventilator chamber between the semipermeable film and a film which is impermeable to both gas and also resin, as well as a resin supply line and evacuation means. Both the ventilator chamber and also the injection chamber have a vacuum line, so that both chambers may be evacuated separately and in a way which may be regulated and/or controlled.

US-A-2004/265406 discloses the features of the preamble of claims 1 and 2 respectively.

In addition to the infiltration technology for producing CFP composite materials, i.e., the injection of resin under overpressure, i.e., also the infusion of the resin using partial vacuum, the prepreg technology is known. The components which are produced using these two methods each offer characteristic advantages. To be able to combine the particular advantages in a single component, a combination of both production methods and a corresponding device for this purpose have been developed. In the publication "Kombination von Prepreg- und Injektionstechnologie zur Herstellung CFK-Verbundwerkstoffen [Combination of Prepreg and Injection Technology for Producing CFP Composite Materials]" (R. Kaps, P. Schumann, S. Steeger, Institut für Faserverbundleichtbau und Adaptronik [Institute of Composite Structures and Adaptive Systems], DLR Braunschweig, 2006), a combined method and its product were presented. It represents a combination of the prepreg and the so-called "liquid resin injection (LRI)" technology. In manufacturing using the LRI method, fiber composite materials are produced by injection of liquid matrix materials into premolded, dry fibrous material and subsequent curing. A component manufactured using hybrid technology from both manufacturing methods thus comprises a pre-impregnated (prepreg) area and an area to be injected, the injection resin being supplied from the outside through a seal of the component.

A seal of this type may comprise a semipermeable film, in particular if the resin is to be introduced into the component by partial vacuum. The component may thus be evacuated without resin also being drawn out of the component with the withdrawal of the air. However, experiments have shown that the semipermeable film does not withstand these strains occurring during the subsequent impingement of the component using pressure to cure the resin in the prepreg and already tears at approximately 1.5 bar absolute pressure. However, at least double this pressure would be desirable for successful curing. If the film is damaged, resin may escape, the component quality may thus be reduced, and the vacuum pump may be damaged. The document US-A-2004/265406 discloses a production device and method for producing fiber-reinforced plastic components comprising a semi-finished prepreg product and a dry semi-finished textile product with an aeration and deaeration chamber and an exhaust line opening into the same for producing a vacuum and a semi-finished textile product chamber to receive a dry semi-finished textile product. Into the semi-finished textile product chamber an injection line for inserting resin opens, whereby a prepreg chamber for receiving a semi-finished prepreg product is provided. The prepreg chamber is located against the aeration and deaeration chamber in an air-permeable manner and the semi-finished textile product chamber is located against it at least in areas in an air-impermeable and resin-permeable manner.; Due to the air-permeable membranes, a vacuum in the aeration and deaeration chamber generates a vacuum both in the prepreg chamber and in the semi-finished textile product chamber.

It is therefore the object of the invention to specify a method and a device, using which a combination of the prepreg method impinged with overpressure and an infusion method is nonetheless possible.

This object is achieved by the method of claim 1 in that during build up of the overpressure in the curing phase, the component chamber is closed essentially gas-tight. The invention thus follows the principle of essentially no longer having vacuum pressure act on the component during the curing phase under pressure. Actually, phases which may be sharply delimited from one another do not have to result, in which the vacuum pressure acts on the one hand and the overpressure acts on the other hand. Rather, ranges which more or less overlap in time may result, so that both pressure states may at least temporarily also act simultaneously. However, the method makes unnecessary the use of a semipermeable layer, which does not withstand the typical pressure conditions for curing a prepreg. The invention thus offers a method which allows a reliable combination of the prepreg method on the one hand and the infusion method on the other hand. It is usable for all types of fibrous elements, whether woven fabrics, scrims, braids, or nonwoven materials and/or matted fiber mats, and also for one-component and/or two-component systems as the resin.

The component chamber may be mechanically closed by the intervention of an operator at the beginning or during the curing phase, for example. Because the component chamber is located inside a pressure-impinged and heated autoclave, a manual closing may thus only be performed via suitable mechanical devices for operating the pressure-impinged and temperature-impinged chamber from the outside. According to the design of the method according to the invention, the component chamber is automatically closed as a result of the buildup of the overpressure. The closing of the component chamber is thus automatically executed, from which a lower susceptibility to error and therefore a more robust manufacturing method result. The automation of this method step additionally results in a simplification of the quality control, because the closing of the component chamber does not have to be separately checked.

The object cited in the invention is achieved by the device of claim 2 in that a vacuum chamber is implemented, which contains a component chamber, which may be evacuated by a vacuum pump jointly with the vacuum chamber, the component chamber being partitioned in relation to the vacuum chamber by means which are closable upon application of an autoclave overpressure. By the chronological establishment and possible separation of a phase in which the vacuum pressure acts, and a phase in which the overpressure is applied, positioning a semipermeable membrane, which is typically used in a so-called VAP method, may be dispensed with. Dispensing with the semipermeable membrane allows the application of correspondingly higher pressures, so that the prepreg curing may also be performed in the desired quality.

The means which separate the component chamber from the vacuum chamber may be actuated in a separate operating step at the beginning or during the curing phase, for simple. In the design of the invention, however, the means are implemented as automatically closable independently of pressure. This makes unnecessary a separate operating step, which complicates the construction and the method, and makes them more complex and thus more costly and finally more susceptible to error. Automatic closing of the means thus simplifies ensuring the desired quality of the produced product.

According to a further design of the device according to the invention, the means comprise a valve which is gas-transmitting upon application of a partial vacuum and closes gas-tight upon application of an overpressure. A valve of this type may fundamentally be implemented in various ways, for example, as a typical valve having a valve body which is pressed gas-tight onto a valve seat in the blocking direction. However, other common construction principles for valves are conceivable, as long as they allow a continuity of the partial vacuum and close in the event of overpressure.

However, the curing resin system may clog the valve which is located in the inner chamber of the temperature-impinged autoclave. The valve may therefore be cumbersome to clean or become unusable after a curing procedure. According to a further advantageous design of the device according to the invention, the means may therefore comprise a spatial structure compressible under autoclave overpressure. Thus, for example, it may comprise an open-pored foam, a nonwoven material, or a woven fabric, which is completely compressible under the autoclave overpressure and is then at least gas-tight. While the spatial structure represents a passage for gases in the event of partial vacuum, this passage is essentially closed upon application of an overpressure. The means, i.e., the foam or a spatial woven fabric or knitted fabric, may be easily integrated in the gas-tight linear seal of the component chamber in relation to the vacuum chamber at the boundary of the component chamber. As a component of the seal, they run around the periphery of the component chamber and are easy to dimension by their width. Because they may have a greater width extension than a valve situated at a concrete location, they spatially concentrate the exhausted gas less, and thus cause a lower rate of flow of the exhausted gas. They may thus also reduce the danger of being clogged with exhausted resin. To further decrease this danger, the means may additionally be situated multiple times on the periphery of the component chamber.

According to a further advantageous design of the invention, the means comprise a sealing cord coupled to a flow promoter as a gas-transmitting passage. The plastically deformable material of the sealing cord may be pressed under overpressure into the spatial structure of the flow promoter and thus reliably and irreversibly seals the vacuum channel released under partial vacuum. The sealing cord may also be combined with a compressible spatial woven fabric or knitted fabric and support the seal action as a result of the compression of the spatial structure. Vacuum-transmitting and overpressure-blocking means may thus be produced in a simple way from known auxiliary materials.

According to a further advantageous design of the device according to the invention, the component chamber is formed by a pressure-tight and non-perforated film which may be partitioned pressure-tight from the vacuum chamber by a sealing cord coupled to a flow promoter. A flexible component chamber is thus available, which on the one hand supports the evacuation of the component to be produced and on the other hand survives the pressure strains during the curing phase without damage. It thus contributes decisively to the quality of the component to be produced.

The principle of the invention is explained in greater detail for exemplary purposes hereafter on the basis of a drawing. In the figures of the drawing:
Figure 1: shows a schematic manufacturing layout,
Figure 2: shows a cycle course during the production.

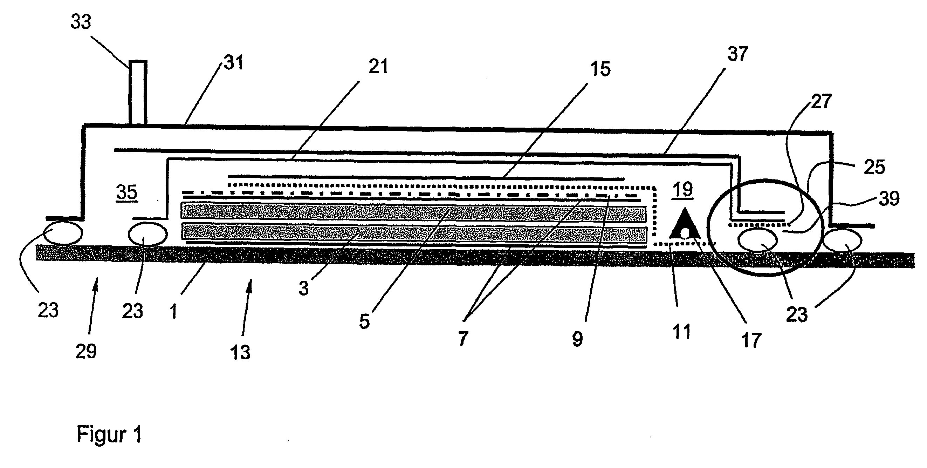

Figure 1 shows a sectional illustration through a manufacturing layout for performing the method according to the invention. The prepreg 3 and a CFP scrim 5 are stacked one on top of another on an autoclave table 1. To simplify the illustration, they are shown as planar formations, but they may also have more complex structures, for example, spatial structures. A layer of tearoff fabric 7 is situated above and below each of them. A perforated partition film 9 lies above the tearoff fabric 7, which is in turn covered by a flat flow promoter 11. It comprises a woven fabric or knitted fabric having a spatial structure, so that liquids and gases may flow through it in its plane of extension. This layered construction 13 covers a molded plate 15 over nearly its entire area. In addition to the layered construction 13, a sprue profile 17 rests on the flow promoter 11, which is guided laterally down on the layered construction 13 and forms a substrate of the sprue profile 17. The layered construction 13 and the sprue profile 17 are situated in a component chamber 19. It is formed by a non-perforated partition film 21, which encloses the layered construction 13 including the sprue profile 17 and rests on the autoclave table 1. It is sealed gas-tight and pressure-tight using a sealing cord 23 at its contact area 29 to the autoclave table 1. A section of a flow promoter 27, which has at least the same geometric properties as the flow promoter 11, is inserted in an outlet area 25 between the sealing cord 23 and the partition film 21.

The entire component chamber 19 below the partition film 21 is enclosed by a vacuum film 31, which completely spans the partition film 21 and its outlet area 25 as well as its contact area 29 to the autoclave table 1. It is in turn connected pressure-tight and gas-tight using a sealing cord 23 in relation to the autoclave table 1. It has a vacuum connection 33, which is connected to a vacuum pump (not shown). Finally, a bleeder 37 is situated between the vacuum film 31 and the partition film 21, i.e., in a vacuum chamber 35.

The prepreg 3 and the CFP scrim 5 are infused using a resin, such as an RTM resin, via the sprue profile 17. The flow promoter 11 above the layered construction 13 ensures that the infused resin is distributed as uniformly as possible starting from the sprue profile 17 over the entire layered construction 13 and may penetrate largely uniformly into the layered construction 13. In order that the future cured component may be removed from the autoclave table 1, the underlaying prepreg 3 is separated by a tearoff fabric 7 from the autoclave table 1. For the same reason, the overlaying CFP scrim 5 is covered in relation to the layers situated above it by a similar tearoff fabric 7. The perforated partition film 9, which absorbs and dissipates excess resin if necessary, lies on this fabric. The molded plate 15 laid on the flow promoter 11 is used for fixing the layered construction 13 and evening out the infused resin.

In a first method step, the infiltration phase, the vacuum chamber 35 is evacuated, and with it the component chamber 19. The bleeder 37 ensures a uniform distribution of the vacuum pressure between the flexible vacuum film 31 and the partition film 21, which is also flexible. Because the partition film 21 is gas-tight, the flow promoter 27 between the sealing cord 23 and the partition film 21 in the outlet area 25 forms a vacuum channel 39 out of the component chamber 19. It ensures that the vacuum may also act below the partition film 21 in spite of the otherwise pressure-tight seal of the component chamber 19 in relation to the autoclave table and the component chamber 19 may also be evacuated. On the one hand the vacuum draws the resin into the layers of the layered construction 13 and on the other hand it exhausts the air volume displaced by the resin in the layers. In addition, it withdraws the outgassing occurring from the resin under overpressure. A largely low-porosity and cavity-free curing of the resin may thus be achieved.

The vacuum channel 39 on the component chamber 19 and the vacuum connection 33 on the vacuum film 31 are spatially situated as far apart from one another as possible. The longest possible flow path thus arises, to reduce the probability that resin will be drawn out of the component chamber via the vacuum chamber into the vacuum pump and result in damage therein.

To cure the infusion resin and the resin contained in the prepreg, the illustrated construction is impinged with both an elevated temperature and also an elevated pressure in a second method step, the curing phase. At least at the beginning of the curing phase, the vacuum pressure is still maintained. Infusion resin which has not yet cured is subject under pressure to the undesired tendency to be driven out of the layered construction 13 and drawn in the direction of the vacuum pump, following the vacuum action. To prevent this, the vacuum pump is not turned off upon application of the overpressure, for example. This is because the desired support action of the partition film 21 and vacuum film 31 nestled around the layered construction 13 by the partial vacuum could thus be lost. Rather, the applied overpressure presses the sealing cord 23 in the outlet area 25 into the flow promoter 27 and thus automatically seals the vacuum channel 39. The vacuum channel is successively closed from the outside without further effects with application of the overpressure, in that the plastically deformable material of the sealing cord 23 presses into the spatial structure of the flow promoter 27. A pressure-tight seal of the vacuum channel 39, from which no resin may subsequently escape, thus arises together with easy compressibility of the flow promoter 27.

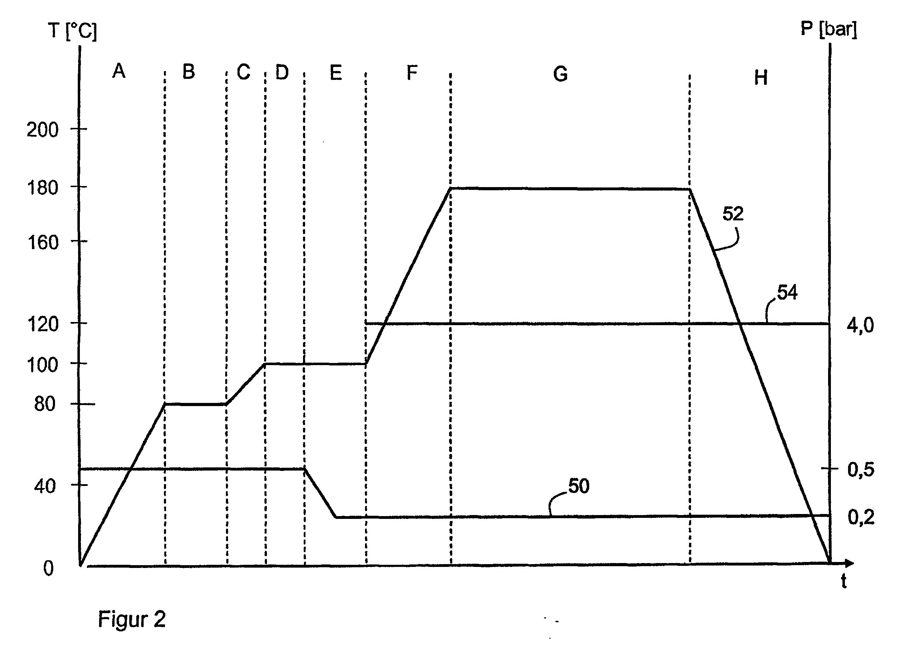

The manufacturing layout shown in Figure 1 is moved into an autoclave, in which a desired and necessary pressure and temperature control may be performed, to cure the infiltrated layer construction 13. A cycle course during a typical production method in an autoclave is shown by the diagram in Figure 2. The temperature is indicated on the left ordinate, the pressure is indicated on the right ordinate, and the time curve is indicated on the abscissa therein. The curve 50 represents the curve of the vacuum pressure, the curve 52 represents the temperature curve, and the curve 54 represents the autoclave pressure.

At the beginning of the production method, a vacuum pressure of approximately 500 mbar absolute pressure is applied in a first phase A. The temperature is increased to 80° simultaneously in the phase A. This temperature is material-dependent and is oriented to a limiting value of the resin in the prepreg, from which the resin begins to cure. Because the curing is first to be performed at a later point in time after the infusion of the resin, the target value of the temperature in the phase A remains below this temperature limiting value.

In a subsequent phase B, vacuum and temperature are maintained for a time span of approximately 60 minutes, for example. This time span is a function of the resin used and may last a span of 0 to 120 minutes, for example. The vacuum chamber 35 and with it the component chamber 19 are thus largely evacuated. The duration of the phase B is used to stabilize the conditions inside the manufacturing layout. The existing air volumes are largely dissipated. In addition, the resin from the prepreg material 3 secretes easily volatile gaseous components under temperature and partial vacuum, which are also exhausted to reduce pore formation. A part of the liquefied resin in the prepreg material 3 now already travels into the dry material 5 and thus ensures a future bond between the two materials.

In a subsequent transition phase C, there is a temperature rise from 80°C to approximately 100°C at a uniform vacuum pressure of 500 mbar absolute pressure. The conditions of the subsequent phase are thus achieved. The temperature value of 100°C is a function of the component and resin, and results as the mean value between a sufficient viscosity of the infused RTM resin on the one hand and a curing temperature for the resin contained in the prepreg on the other hand. The infusion resin must be sufficiently viscous to be able to penetrate the layered construction 13 completely. A higher temperature is desirable for this purpose. However, at these temperatures the resin of the prepreg may already begin to cure, by which the bond between the infused resin and the prepreg may worsen. A lower temperature is thus desirable for this purpose. The target temperature of the phase C is thus to be selected as a compromise between these two contradictory requirements and is a function in particular of the properties of the particular resins used.

The subsequent phase D represents an infusion phase in which infusion resin is infused into the component chamber 19 driven by vacuum. The infusion phase D may last approximately 15 to 20 minutes and is a function, inter alia, of the quantity of the resin to be infused, its viscosity, and the dimensions and the shape of the component. The increase of the temperature to 100° is used, *inter alia,* for the viscosity of the injected mixture, which is especially low in this temperature range, without the curing reactions already beginning.

The distribution of the injection material inside the component chamber 19 is supported by the flow promoter 11, which is located both on the layered construction 13 and also below the sprue profile 17. On the layered construction 13, it ensures the most uniform possible distribution of the infusion material, which then penetrates into the CFP scrim 5 and the prepreg 3. This procedure is supported by the application of the vacuum which more or less sucks the infusion material into the layered construction 13. To avoid a deformation of the layered construction during the infusion under the application of the vacuum, it is covered by the molded plate 15. It additionally ensures an equalization and distribution of the infusion material over the entire area of the layered construction 13.

The infusion phase D is followed by a distribution phase E, which may last approximately 15 minutes. It offers the infusion material of the possibility of distributing itself as uniformly as possible inside the component chamber 19, i.e., completely penetrating the layered construction. Its duration is oriented to the progress of the resin front in the layered construction 13, until it has passed completely through it. During the distribution phase, in which the temperature is maintained at 100°, the vacuum pressure is lowered to approximately 200 mbar absolute pressure and kept there.

In a subsequent transition phase F, the temperature is elevated from 100° to approximately 180° at uniform vacuum pressure of 200 mbar absolute pressure. An autoclave overpressure of approximately 4 bar absolute pressure is also applied. The vacuum channel 39 closes automatically to avoid possible expulsion of resin out of the layered construction 13 under pressure.

The conditions for the subsequent curing phase G are thus provided. It lasts approximately 120 minutes and provides favorable conditions for the complete curing of the infused resin and its bonding to the prepreg by the pressure of 4 bar absolute pressure and a temperature of 180°. While the temperature ensures the most complete possible reaction of the resin, the pressure of 4 bar results in its low-porosity and cavity-free curing.

The autoclave absolute pressure of 4 bar acts on the vacuum chamber 35 and on the component chamber 19. In particular at the beginning of the application of the autoclave pressure in the transition phase F, in which the injection material still has a relatively high viscosity, the danger exists that the autoclave pressure will press the resin out of the layered construction 13. Via the vacuum channel 19, the resin may reach the vacuum chamber 35 and from there, via the vacuum connection 33, the vacuum pump (not shown). To avoid the damage to the vacuum pump as a result of a resin escape on the one hand and the loss of infusion material in the layered construction on the other hand, the resin escape is to be prevented. This is performed in that the vacuum channel 39 is automatically closed upon application of the autoclave pressure. The autoclave pressure itself is used for this purpose, in that it compresses the flow promoter between the partition film 21 and the sealing cord 23. It presses the flexible sealing cord 23 into the flow promoter 27, by which the vacuum channel 39 is closed pressure-tight. The autoclave pressure itself thus ensures a closure of the vacuum channel 39, so that no separate operating step from the outside is necessary. It would only complicate the manufacturing layout. The combination of the sealing cord 23 and the flow promoter 27 in the outlet area 25 between the partition film 21 an autoclave table 1 thus acts more or less like a valve which is gas-transmitting and/or open under the vacuum pressure, i.e., at partial vacuum, but automatically closed upon application of an overpressure which is greater than 1 bar.

A final phase H follows the curing phase G, in which the temperature is returned to room temperature from 180° at uniform pressure conditions. A tempering phase may follow it if needed.

### List of reference numerals:

- 1: autoclave table
- 3: prepreg
- 5: CFP scrim
- 7: tearoff fabric
- 9: perforated partition film
- 11: flow promoter
- 13: layered construction
- 15: molded plate
- 17: sprue profile
- 19: component chamber
- 21: partition film
- 23: sealing cord
- 25: outlet area
- 27: flow promoter section
- 29: contact area
- 31: vacuum film
- 33: vacuum connection
- 35: vacuum chamber
- 37: bleeder
- 39: vacuum channel
- 50: vacuum curve
- 52: temperature curve
- 54: autoclave pressure

- A: starting phase
- B: vacuum phase
- C: transition phase
- D: injection phase
- E: distribution phase
- F: transition phase
- G: curing phase
- H: final phase

## Claims

1. A method for producing fiber reinforced composite components from dry material (5) and prepregs or preimpregnated fibrous semifinished products (3), under vacuum support and elevated temperature and pressure in an autoclave, in which a component chamber (19) being formed between a non-perforated partition film (21) and a table (1) of an autoclave, is implemented inside a vacuum chamber (35) being formed by said table (1) and a vacuum film (31) which may be evacuated jointly with said component chamber, having the following phases:
a) a resin injection phase, in which the vacuum chamber (35) is evacuated,
b) a curing phase, in which an autoclave overpressure is applied,
**characterized in that**
the absolute pressure of said overpressure is greater than a partial vacuum pressure in said vacuum chamber:
and vacuum-transmitting and overpressure-blocking means (23.27) consisting of a plastically deformable cord shaped sealing material (23) in contact with a flow promoter (27) is provided between said partition film (21) and said table (1) such that these means act as gas-transmitting under the partial vacuum pressure but closes in a gas-tight and pressure-tight manner during the application of said overpressure by compressing said sealing material into said flow promoter (27).

2. A device for performing the method of claim 1 in which at component chamber (19) is being formed between a non-perforated partition film (21) and a table (1) of an autoclave, said component chamber being implemented inside a vacuum chamber (35) being formed by said table (1) and a vacuum film (31) which entirely encloses the component chamber said vacuum film having an outlet area (25) and a contact area (29) respective to the table (1) and means to evacuate said vacuum chamber jointly with said component chamber,
**characterized by**
vacuum-transmitting and overpressure-blocking means (23.27) consisting of a plastically deformable cord shaped sealing material (23) in contact with a flow promoter (27) provided between said partition film (21) and said table (1), these means acting as gas-transmitting under the partial vacuum pressure but closing in a gas-tight and pressure-tight manner during the application of an overpressure in said autoclave by compressing said sealing material into said flow promoter (27).

3. The device according to claim 2, containing a vacuum connection (33) connected to a vacuum pump: a bleeder being situated between the vacuum film (31) and the partition film (21) in said vacuum chamber (35): the bleeder (37) ensuring a uniform distribution of the vacuum pressure between the vacuum film (31) and the partition film (21), both said films being flexible.

4. The device according to claim or 3, wherein the flow promoter (27) is positioned between the plastically deformable and cord shaped seating material (23) and the partition film (21) thereby forming a vacuum channel (39) out of the component chamber (19) : the vacuum channel (39) ensuring that the vacuum also acts below the partition film (21) and a pressure tight seal of the component chamber (19) is obtainable with the application of the overpressure by pressing the sealing cord into the flow promoter (27).

## Patentansprüche

1. Ein Methode zum Produzieren von Faserverbundbauteilen aus Trockenmaterial (5) und Prepregs oder vorimprägnierten faserigen Halbfabrikaten (3) mit Vakuumunterstützung und erhöhter Temperatur sowie erhöhtem Druck in einem Autoklav, in dem eine Bauteilkammer (19), welche zwischen einer undurchlöcherten Trennfolie (21) und einem Tisch (1) eines Autoklav gebildet wird, in einer Vakuumkammer (35) implementiert wird, welche von dem genannten Tisch (1) und einer Vakuumfolie (31) gebildet wird, die zusammen mit der genannten Bauteilkammer entnommen werden können. Die Methode hat folgende Phasen:
a) Eine Harzeinspritzphase, in welcher die Vakuumkammer (35) entnommen wird,
b) Eine Abbindephase, in welcher ein Autoklav-Überdruck aufgebracht wird.
**Dadurch gekennzeichnet, dass**:
Der absolute Druck des genannten Überdrucks größer als ein Teilvakuumdruck in der genannten Vakuumkammer ist;
Und sich die Vakuumübertragungs- und Überdruckblockierungsmittel (23.27), die aus einem plastisch verformbaren schnurförmigen Dichtmittel (23) in Kontakt mit einer Fließhilfe (27) bestehen, zwischen der genannten Trennfolie (21) und dem genannten Tisch (1) befinden, sodass diese Mittel unter dem Teilvakuumdruck gasübertragend wirken, aber während des Aufbringens des genannten Überdrucks durch das Komprimieren des genannten Dichtmittels in die genannte Fließhilfe (27) gas- und druckdicht schließen.

2. Eine Vorrichtung zum Durchführen der Methode von Anspruch 1, in der eine Bauteilkammer (19) zwischen einer undurchlöcherten Trennfolie (21) und einem Tisch (1) eines Autoklav gebildet wird. Die genannte Bauteilkammer wird in einer Vakuumkammer (35) implementiert, die von dem genannten Tisch (1) und einer Vakuumfolie (31) gebildet wird. Die Bauteilkammer wird vollständig von der Vakuumkammer umschlossen. Die genannte Vakuumfolie hat einen Auslassbereich (25) und einen Kontaktbereich (29) zum Tisch (1), und Mittel zum Ausführen der genannten Vakuumkammer zusammen mit der genannten Bauteilkammer,
**Gekennzeichnet durch**:
Die Vakuumübertragungs- und Überdruckblockierungsmittel (23.27), die aus einem plastisch verformbaren schnurförmigen Dichtmittel (23) in Kontakt mit einer Fließhilfe (27) bestehen und sich zwischen der genannten Trennfolie (21) und dem genannten Tisch (1) befinden. Diese Mittel wirken unter dem Teilvakuumdruck gasübertragend, schließen aber während des Aufbringens eines Überdrucks im genannten Autoklav **durch** das Komprimieren des genannten Dichtmittels in die genannte Fließhilfe (27) gas- und druckdicht.

3. Die Vorrichtung gemäß Anspruch 2. enthält einen Vakuumanschluss (33), der an eine Vakuumpumpe angeschlossen ist: Zwischen der Vakuumfolie (31) und der Trennfolie (21) befindet sich eine Entlüftung in der genannten Vakuumkammer (35): Die Entlüftung (37) gewährleistet eine gleichmäßige Verteilung des Vakuumdrucks zwischen der Vakuumfolie (31) und der Trennfolie (21). Beide genannten Folien sind biegsam.

4. Die Vorrichtung gemäß Anspruch 2 oder 3, in welcher die Fließhilfe (27) zwischen dem plastisch verformbaren und schnurförmigen Dichtmittel (23) und der Trennfolie (21) positioniert ist, wodurch ein Vakuumkanal (39) aus der Bauteilkammer (19) heraus gebildet wird; der Vakuumkanal (39) gewährleistet, dass das Vakuum auch unter der Trennfolie (21) wirkt, und eine druckdichte Versiegelung der Bauteilkammer (19) ist durch das Aufbringen von Überdruck durch Pressen der Dichtungsschnur in die Fließhilfe (27) erreichbar.

## Revendications

1. Procédé de production de composants composites renforcés de fibres à partir d'un matériau sec (5) et de prépregs ou produits semi-finis fibreux préimprégnés (3), sous vide et à température et pression élevées dans un autoclave, dans lequel une chambre à composants (19) formée entre un film de séparation non perforé (21) et un plateau (1) d'un autoclave est disposée à l'intérieur d'une chambre à vide (35) formée par ledit plateau (1) et un film à vide (31) qui peut être évacuée conjointement avec ladite chambre à composants, comportant les phases suivantes :
a) une phase d'injection de résine, dans laquelle la chambre à vide (35) est évacuée,
b) une phase de durcissement, dans laquelle une surpression est appliquée dans l'autoclave,
**caractérisé en ce que**
la pression absolue de ladite surpression est supérieure à une dépression partielle dans ladite chambre à vide ;
et des moyens de mise sous vide et de blocage de la surpression (23, 27) consistant en un matériau d'étanchéité en forme de cordon déformable plastiquement (23) en contact avec un dispositif favorisant l'écoulement (27) sont disposés entre ledit film de séparation (21) et ledit plateau (1) de telle sorte que ces moyens agissent pour transmettre un gaz sous la dépression partielle, mais se ferment de manière étanche aux gaz et étanche à la pression pendant l'application de ladite surpression par compression dudit matériau d'étanchéité à l'intérieur dudit dispositif favorisant l'écoulement (27).

2. Dispositif pour mettre en oeuvre le procédé de la revendication 1 dans lequel une chambre à composants (19) est formée entre un film de séparation non perforé (21) et un plateau (1) d'un autoclave, ladite chambre à composants étant disposée à l'intérieur d'une chambre à vide (35) formée par ledit plateau (1) et un film à vide (31) qui entoure entièrement la chambre à composants, ledit film à vide comportant une zone de sortie (25) et une zone de contact (29) par rapport audit plateau (1) et des moyens pour évacuer ladite chambre à vide conjointement avec ladite chambre à composants,
**caractérisé par**
des moyens de mise sous vide et de blocage de la surpression (23, 27) consistant en un matériau d'étanchéité en forme de cordon déformable plastiquement (23) en contact avec un dispositif favorisant l'écoulement (27) disposés entre ledit film de séparation (21) et ledit plateau (1), ces moyens agissant pour transmettre un gaz sous la dépression partielle, mais se fermant de manière étanche aux gaz et étanche à la pression pendant l'application d'une surpression dans ledit autoclave par compression dudit matériau d'étanchéité à l'intérieur dudit dispositif favorisant l'écoulement (27).

3. Dispositif selon la revendication 2, contenant un raccord à vide (33) relié à une pompe à vide, un purgeur étant situé entre le film à vide (31) et le film de séparation (21) dans ladite chambre à vide (35), le purgeur (37) assurant une distribution uniforme de la dépression entre le film à vide (31) et le film de séparation (21), les deux dits films étant flexibles.

4. Dispositif selon la revendication 2 ou 3, dans lequel le dispositif favorisant l'écoulement (27) est positionné entre le matériau d'étanchéité en forme de cordon déformable plastiquement (23) et le film de séparation (21), formant ainsi un canal à vide (39) en dehors de la chambre à composants (19), le canal à vide (39) garantissant que le vide agit également en dessous du film de séparation (21) et qu'une étanchéité à la pression de la chambre à composants (19) peut être obtenue par l'application de la surpression en comprimant le cordon d'étanchéité à l'intérieur du dispositif favorisant l'écoulement (27).
